(19) Europäisches Patentamt
European Patent Office
Office européen des brevets

(11) Publication number: 0 148 507
B1

(12) EUROPEAN PATENT SPECIFICATION

(45) Date of publication of patent specification: 26.07.89

(51) Int. Cl.$^4$: C 09 K 11/85

(21) Application number: 84116448.6

(22) Date of filing: 28.12.84

# (54) Phosphor and radiation image storage panel employing the same.

(30) Priority: 28.12.83 JP 247317/83
24.01.84 JP 11762/84
24.01.84 JP 11763/84

(43) Date of publication of application:
17.07.85 Bulletin 85/29

(45) Publication of the grant of the patent:
26.07.89 Bulletin 89/30

(84) Designated Contracting States:
BE DE FR GB NL

(56) References cited:
EP-A-0 083 085

(73) Proprietor: FUJI PHOTO FILM CO., LTD.
210 Nakanuma Minami Ashigara-shi
Kanagawa 250-01 (JP)

(72) Inventor: Mori, Nobufumi c/o Fuji Photo Film Co., Ltd.
No. 798, Miyanodai Kaisei-machi
Ashigara-kami-gun Kanagawa (JP)
Inventor: Takahashi, Kenji c/o Fuji Photo Film Co., Ltd.
No. 798, Miyanodai Kaisei-machi
Ashigara-kami-gun Kanagawa (JP)
Inventor: Arakawa, Satoshi c/o Fuji Photo Film Co., Ltd.
No. 798, Miyanodai Kaisei-machi
Ashigara-kami-gun Kanagawa (JP)
Inventor: Umemoto, Chiyuki c/o Fuji Photo Film Co., Ltd.
No. 798, Miyanodai Kaisei-machi
Ashigara-kami-gun Kanagawa (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 148 507 B1

## Description

Background of the invention

Field of the invention

This invention relates to a phosphor and a radiation image storage panel employing the same, and more particularly, to a divalent europium activated barium fluorohalide phosphor and a radiation image storage panel employing the same.

Description of the prior art

Recently, it has been found that a divalent europium activated barium fluorohalide phosphor ($BaFX:Eu^{2+}$, in which X is at least one halogen selected from the group consisting of Cl, Br and I) absorbs and stores a portion of radiation energy when exposed to a radiation such as X-rays, and emits light in the near ultraviolet to blue light region when excited with an electromagnetic wave within a wavelength region of 450—900 nm after exposure to the radiation, that is, the phosphor shows stimulated emission (the peak wavelength of the stimulated emission is within the region of approx. 385—405 nm, depending upon the kind of halogen which is a component of the phosphor). In particular, the divalent europium activated barium fluorohalide phosphor has been paid much attention and investigated as a stimulable phosphor employable for a radiation image storage panel (i.e., stimulable phosphor sheet) which is used in a radiation image recording and reproducing method utilizing the stimulability thereof.

A radiation image storage panel has a basic structure comprising a support and at least one phosphor layer provided on one surface of the support, which comprises a binder and a stimulable phosphor dispersed therein. Further, a transparent protective film is generally provided on the free surface (surface not facing the support) of the phosphor layer to keep the phosphor layer from chemical deterioration or physical shock.

The radiation image recording and reproducing method using the above-described radiation image storage panel comprising the stimulable phosphor is a very advantageous method replacing the conventional radiography. As described, for example, in U.S. Patent No. 4,239,968, the method involves steps of causing the stimulable phosphor of the panel to absorb radiation energy having passed through an object or having radiated from an object; exciting the stimulable phosphor with an electromagnetic wave such as visible light and infrared rays (hereinafter referred to as "stimulating rays") to sequentially release the radiation energy stored in the stimulable phosphor as light emission (stimulated emission); photoelectrically detecting (reading out) the emitted light to obtain electric signals; and reproducing a visible image from the electric signals on a recording material such as a photosensitive film or on a display device such as CRT.

In the radiation image recording and reproducing method, a radiation image can be obtained with a sufficient amount of information by applying a radiation to the object at considerably smaller dose, as compared with the case of using the conventional radiography. Accordingly, this radiation image recording and reproducing method is of great value especially when the method is used for medical diagnosis.

The operation of reading out the radiation energy stored in the radiation image storage panel in the above-described method is generally carried out by the steps of scanning the panel with a laser beam (stimulating rays) to sequentially excite the stimulable phosphor so as to release the radiation energy stored therein as light emission and detecting the light by a photosensor such as a photomultiplier.

In the last step of the read-out operation, the light which is continuously emitted by the stimulable phosphor of the radiation image storage panel after terminating the excitation with stimulating rays (namely, afterglow of stimulated emission) causes the decrease of S/N ratio of the resulting image. More in detail, the afterglow given by the phosphor particles other than the phosphor particles aimed to excite is detected as the light emitted by the aimed ones in the case that the phosphor gives afterglow in a relatively high ratio to the amount of the stimulated emission. As a result, the image provided by the radiation image storage panel comprising such a stimulable phosphor tends to be deteriorated on the image quality (sharpness, density resolution, etc.).

The afterglow characteristics of the panel varies depending not only on the employed stimulable phosphor but also on the intensity of stimulating rays, the scanning speed in the case of using a laser beam as the stimulating rays, or the like. In practical use, the influence of afterglow on the image quality further varies depending upon the detecting procedure of stimulated emission. However, it is of great value to improve the afterglow characteristics of the panel which give an adverse effect to the image quality, even if the improvement is not so high.

The radiation image recording and reproducing method using the radiation image storage panel comprising the stimulable phosphor is very advantageous as described above, and the method is desired to show the sensitivity thereof as high as possible. The sensitivity of the radiation image storage panel to a radiation generally increases as the luminance of stimulated emission of the phosphor employed in the panel increases. Accordingly, it is desired that the luminance of stimulated emission of the phosphor employed for the panel is as high as possible.

As described in Japanese Patent Provisional Publication No. 59(1984)-56479, the above-described divalent europium activated barium fluorohalide phosphor is improved in the luminance of stimulated

emission by incorporating a specific amount of sodium halide thereinto. More in detail, the divalent europium activated barium fluorohalide phosphor containing sodium halide having the formula:

$$BaFX \cdot aNaX':xEu^{2+}$$

in which each of X and X' is at least one halogen selected from the group consisting of Cl, Br and I; and *a* and *x* are numbers satisfying the conditions of $0<a\leqq2.0$ and $0<x\leqq0.2$, respectively, gives stimulated emission of higher luminance than the phosphor containing no sodium halide. However, the incorporation of sodium halide into the phosphor tends to deteriorate the afterglow characteristics of stimulated emission thereof. It is desired that the divalent europium activated barium fluorohalide phosphor containing sodium halide with the above formula is improved in the afterglow characteristics.

Summary of the invention

It is an object of the present invention to provide a divalent europium activated barium fluorohalide phosphor which is improved in the afterglow given after termination of the excitation with stimulating rays.

It is another object of the present invention to provide a divalent europium activated barium fluorohalide phosphor which is improved in the luminance of stimulated emission as well as in the afterglow characteristics.

It is a further object of the present invention to provide a radiation image storage panel which is improved in the quality of the image provided thereby.

It is a still further object of the present invention to provide a radiation image storage panel which is enhanced in the sensitivity as well as in the image quality.

The present inventors have studied on the divalent europium activated barium fluorohalide phosphor containing sodium halide, and as a result, they have found that the afterglow characteristics of stimulated emission of the phosphor can be remarkably improved by incorporating calcium and/or strontium within a specific amount range thereinto. The inventors have also found that the phosphor containing the specific amounts of sodium halide and calcium and/or strontium shows stimulated emission of high luminance as well as the remarkably improved afterglow characteristics.

The phosphor of the present invention is a divalent europium activated barium fluorohalide phosphor containing calcium and/or strontium in addition to sodium halide and having the formula (I):

$$(Ba_{1-a-b}, Ca_a, Sr_b)FX \cdot cNaX':xEu^{2+} \qquad (I)$$

in which each of X and X' is at least one halogen selected from the group consisting of Cl, Br and I; *a* and *b* are numbers satisfying the conditions of $0\leqq a\leqq10^{-1}$ and $0\leqq b\leqq10^{-1}$ and $a+b\neq0$, provided that $a+b$ is not higher than $5\times10^{-2}$ in the case of $ab\neq0$; and *c* and *x* are numbers satisfying the conditions of $0<c\leqq2.0$ and $0<x\leqq0.2$, respectively.

The radiation image storage panel of the present invention comprises a support and a stimulable phosphor layer provided thereon, in which the stimulable phosphor layer contains the divalent europium activated barium fluorohalide phosphor having the formula (I).

More in detail, the invention is accomplished on the finding that the divalent europium activated barium fluorohalide phosphor having the formula (I) has the prominently improved afterglow characteristics particularly in a period of approx. $10^{-3}$—$10^{-2}$ sec. after excitation with stimulating rays.

It has been also confirmed that the phosphor having the formula (I) of the invention gives stimulated emission of higher luminance than the phosphor containing neither calcium nor strontium (i.e., the divalent europium activated barium fluorohalide phosphor containing only sodium halide) when excited with an electromagnetic wave having a wavelength within the range of 450—900 nm after exposure to a radiation such as X-rays.

Accordingly, the sensitivity of the radiation image recording and reproducing method can be enhanced and an image of high quality can be stably obtained by using the radiation image storage panel of the present invention employing the above-mentioned divalent europium activated barium fluorohalide phosphor having the above formula (I).

Brief description of the drawings

Fig. 1 graphically shows the afterglow characteristics of a radiation image storage panel containing

$$(Ba_{0.99}, Ca_{0.01})FBr \cdot 0.0023NaBr:0.001Eu^{2+}$$

phosphor according to the present invention (dotted curve), and of a radiation image storage panel containing

$$BaFBr \cdot 0.0023NaBr:0.001Eu^{2+}$$

phosphor for comparison (solid curve).

Fig. 2 graphically shows a relationship between an amount of calcium (*a* value) and a relative amount

of afterglow (solid curve), and a relationship between *a* value and a relative sensitivity (dotted curve) with respect to the radiation image storage panel containing

$$(Ba_{1-a}, Ca_a)FBr \cdot 0.0023NaBr{:}0.001Eu^{2+}$$

phosphor.

Fig. 3 graphically shows the afterglow characteristics of a radiation image storage panel containing

$$(Ba_{0.99}, Sr_{0.01})FBr \cdot 0.0023NaBr{:}0.001Eu^{2+}$$

phosphor according to the present invention (dotted curve), and of a radiation image storage panel containing

$$BaFBr \cdot 0.0023NaBr{:}0.001Eu^{2+}$$

phosphor for comparison (solid curve).

Fig. 4 graphically shows a relationship between an amount of strontium (*b* value) and a relative amount of afterglow (solid curve), and a relationship between *b* value and a relative sensitivity (dotted curve) with respect to the radiation image storage panel containing

$$(Ba_{1-b}, Sr_b)FBr \cdot 0.0023NaBr{:}0.001Eu^{2+}$$

phosphor.

Fig. 5 graphically shows the afterglow characteristics of a radiation image storage panel containing

$$(Ba_{0.99}, Ca_{0.005}, Sr_{0.005})FBr \cdot 0.0023NaBr{:}0.001Eu^{2+}$$

phosphor according to the present invention (dotted curve), and of a radiation image storage panel containing

$$BaFBr \cdot 0.0023NaBr{:}0.001Eu^{2+}$$

phosphor for comparison (solid curve).

Fig. 6 graphically shows a relationship between a total amount of calcium and strontium ([*a*+*b*] value) and a relative amount of afterglow (solid curve), an a relationship between [*a*+*b*] value and a relative sensitivity (dotted curve) with respect to the radiation image storage panel containing

$$(Ba_{1-a-b}, Ca_a, Sr_b)FBr \cdot 0.0023NaBr{:}0.001Eu^{2+}$$

phosphor.

Detailed description of the invention

The divalent europium activated barium fluorohalide phosphor of the present invention has the formula (I):

$$(Ba_{1-a-b}, Ca_a, Sr_b)FX \cdot cNaX'{:}xEu^{2+} \qquad (I)$$

in which each of X and X' is at least one halogen selected from the group consisting of Cl, Br and I; *a* and *b* are numbers satisfying the conditions of $0 \leqq a \leqq 10^{-1}$ and $0 \leqq b \leqq 10^{-1}$ and $a+b \neq 0$, provided that a+b is not higher than $5\times10^{-2}$ in the case of $ab \neq 0$; and *c* and *x* are numbers satisfying the conditions of $0 < c \leqq 2.0$ and $0 < x \leqq 0.2$, respectively.

The phosphor of the invention having the formula (I) gives stimulated emission when excited with an electromagnetic wave having a wavelength within the region of 450—900 nm after exposure to a radiation such as X-rays. From the viewpoint of improving the luminance of the stimulated emission and the afterglow characteristics thereof, the numbers for *a* in the formula (I) which indicates the amount of calcium is preferably within the range of $10^{-3} \leqq a \leqq 5\times10^{-2}$, more preferably $3\times10^{-3} \leqq a \leqq 5\times10^{-2}$, in the case of b=0 (*b* indicates the amount of strontium). Otherwise, the number for *b* is preferably within the range of $5\times10^{-4} \leqq b \leqq 5\times10^{-2}$ in the case of a =0, and the number for *a*+*b* is preferably within the range of $5\times10^{-4} \leqq a+b \leqq 2\times10^{-2}$ in the case of $ab \neq 0$. From the viewpoint of the luminance of stimulated emission, NaX' in the formula (I) which indicates sodium halide is preferably NaBr, and the number for *c* indicating its amount is preferably within the range of $10^{-5} \leqq c \leqq 5\times10^{-1}$, and more preferably $5\times10^{-4} \leqq c \leqq 10^{-2}$.

From the same viewpoint, X indicating halogen is preferably at least one element selected from the group consisting of Br and I. The stimulation spectrum of the phosphor of the present invention is in a wavelength region of 450—900 nm as described above, and its peak shifts toward the longer wavelength side depending upon kind of the halogen X in such an order of halogen X as Cl, Br and I. Accordingly, further from the viewpoint of matching with a source of stimulating rays such as a HeNe laser (633 nm) and a semiconductor laser (infrared rays) which are now proposed for employment in practical use, X in the formula (I) is preferably Br, I, or a combination of Br and I. From the viewpoint of both the luminance of stimulated emission and afterglow characteristics, the number for *x* in the formula (I) which indicates the amount of europium activator is preferably within the range of $10^{-5} \leqq x \leqq 10^{-2}$.

A radiation image storage panel having a phosphor layer which comprises

$$(Ba_{1-a}, Ca_a)FBr \cdot 0.0023NaBr{:}0.001Eu^{2+}$$

phosphor (an example of the phosphor of the present invention) dispersed in a binder has a relationship between *a* value indicating an amount of calcium and an amount of afterglow, and a relationship between the *a* value and a sensitivity (i.e., luminance of stimulated emission) as shown in Fig. 2.

A radiation image storage panel having a phosphor layer which comprises

$$(Ba_{1-b}, Sr_b)FBr \cdot 0.0023NaBr{:}0.001Eu^{2+}$$

phosphor (an example of the phosphor of the present invention) dispersed in a binder has a relationship between *b* value indicating an amount of strontium and an amount of afterglow, and a relationship between the *a* value and a sensitivity (i.e., luminance of stimulated emission) as shown in Fig. 4.

A radiation image storage panel having a phosphor layer which comprises

$$(Ba_{1-a-b}, Ca_a, Sr_b)FBr \cdot 0.0023NaBr{:}0.001Eu^{2+}$$

phosphor (an example of the phosphor of the present invention) dispersed in a binder has a relationship between [*a*+*b*] value indicating a total amount of calcium and strontium and an amount of afterglow, and a relationship between the [*a*+*b*] value and a sensitivity (i.e., luminance of stimulated emission) as shown in Fig. 6.

In Fig. 2 (also in Figs. 4 and 6), a solid curve indicates a relationship between *a* value (*b* value and [*a*+*b*] value, respectively, and a relative amount of afterglow (logarithmic value of [amount of afterglow/amount of stimulated emission]) measured at $2\times10^{-3}$ sec. after scanning with stimulating rays, and a dotted curve indicates a relationship between *a* value (*b* value and [*a*+*b*] value, respectively) and a relative sensitivity. For [*a*+*b*] value in Fig. 6, *a* and *b* values always satisfy the condition of a=b.

As is evident from Fig. 2, the radiation image storage panel containing

$$(Ba_{1-a}, Ca_a)FBr \cdot 0.0023NaBr{:}0.001Eu^{2+}$$

phosphor is improved in the afterglow characteristics (that is, the relative amount of afterglow is reduced), but the sensitivity thereof is extremely lowered when the amount of calcium (*a* value) exceeds $10^{-1}$. It is clear that the panel is prominently improved in the afterglow characteristics without lowering the sensitivity when the *a* value is in the range of $10^{-3}\leqq a\leqq 5\times10^{-2}$. Particularly, in the range of $3\times10^{-3}\leqq a\leqq 5\times10^{-2}$, the panel is remarkably improved in the afterglow characteristics.

It has been confirmed that radiation image storage panels employing other

$$(Ba_{1-a}, Ca_a)FX \cdot cNaX'{:}xEu^{2+}$$

type phosphors (i.e,. containing calcium and not containing strontium) than the above-mentioned one have the same tendencies on the afterglow characteristics and sensitivity as described above.

As is evident from Fig. 4, the radiation image storage panel containing

$$(Ba_{1-b}, Sr_b)FBr \cdot 0.0023NaBr{:}0.001Eu^{2+}$$

phosphor is not improved in the afterglow characteristics (that is, the relative amount of afterglow is increased), and the sensitivity thereof is lowered when the amount of strontium (*b* value) exceeds $10^{-1}$. Particularly in the range of $5\times10^{-4}\leqq b\leqq 5\times10^{-2}$, the panel is remarkably improved in both the afterglow characteristics and the sensitivity.

It has been confirmed that radiation image storage panels employing other

$$(Ba_{1-b}, Sr_b)FX \cdot cNaX'{:}xEu^{2+}$$

type phosphors (i.e., containing strontium and not containing calcium) than the above-mentioned one have the same tendencies on the afterglow characteristics and sensitivity as described above.

As is evident from Fig. 6, the radiation image storage panel containing

$$(Ba_{1-a-b}, Ca_a, Sr_b)FBr \cdot 0.0023NaBr{:}0.001Eu^{2+}$$

phosphor is improved in the afterglow characteristics (that is, the relative amount of afterglow is reduced), but the sensitivity thereof is extremely lowered when the total amount of calcium and strontium ([a+b] value) exceeds $5\times10^{-2}$. Particularly in the range of $5\times10^{-4}\leqq a+b\leqq 2\times10^{-2}$, the panel is remarkably improved in both the afterglow characteristics and the sensitivity.

It has been confirmed that the above-described tendencies on the afterglow characteristics and

sensitivity appears even when the ratio between the amount of calcium (*a* value) and the amount of strontium (*b* value) varies. It has been also confirmed that radiation image storage panels employing other

$$(Ba_{1-a-b}, Ca_a, Sr_b)FX \cdot cNaX':xEu^{2+}$$

type phosphors (i.e., containing both calcium and strontium) than the above-mentioned one have the same tendencies.

Further, the amount of calcium (*a* value) and the amount of strontium (*b* value) contained in the phosphor are preferred to be smaller from the viewpoint of absorption efficiency of the resulting phosphor to a radiation such as X-rays and hygroscopic property thereof. Considering these facts, the *a* and *b* value range of the divalent europium activated barium fluorohalide phosphor of the invention is decided as $0 \leqq a \leqq 10^{-1}$ and $0 \leqq b \leqq 10^{-1}$, except $5 \times 10^{-2} < a+b$ when $a>0$ and $b>0$.

The divalent europium activated barium fluorohalide phosphor of the present invention basically has the above-mentioned formula (I), and other various components may be further incorporated into the phosphor in the preparation thereof, so far as they do not reduce the effect based on the incorporation of Ca and/or Sr (i.e., the improvement of the afterglow characteristics and enhancement of the luminance of stimulated emission). Phosphors containing such additive components are included in the phosphor of the invention. Examples of the additive component include the following substances:

metal oxides as described in Japanese Patent Provisional Publication No. 55(1980)-160078;

tetrafluoroboric acid compounds as described in U.S. Patent Application No. 520,215;

hexafluoro compounds as described in U.S. Patent Application No. 502,648;

alkali metal halides ($M^IX''$, in which $M^I$ is at least one alkali metal selected from the group consisting of Li, K, Rb and Cs; and X″ is at least one halogen selected from the group consisting of F, Cl, Br and I), divalent metal halides ($M^{II}X'''_2$, in which $M^{II}$ is at least one divalent metal selected from the group consisting of Be and Mg; and X‴ is at least one halogen selected from the group consisting of F, Cl, Br and I), and trivalent metal halides ($M^{III}X''''_3$, in which $M^{III}$ is at least one trivalent metal selected from the group consisting of Al, Ga, In and Tl; and X⁗ is at least one halogen selected from the group consisting of F, Cl, Br and I), as described in U.S. Patent Application No. 543,326;

zirconium and scandium as described in Japanese Patent Provisional Publication No. 56(1981)-116777;

boron as described in Japanese Patent Provisional Publication No. 57(1982)-23673;

arsenic and silicon as described in Japanese Patent Provisional Publication No. 57(1982)-23675; and

transition metals as described in U.S. Patent Application No. 535,928.

The incorporation of metal oxides as described in the above-mentioned Japanese Patent Provisional Publication No. 55(1980)-160078 is particularly effective to prevent the sintering of a phosphor in the firing stage of the preparation thereof and to enhance the luminance of stimulated emission of the phosphor and the flowability thereof. The metal oxide is generally incorporated in an amount of $5\times10^{-5}$—0.5 mol per 1 mol of $(Ba_{1-a-b}, Ca_a, Sr_b)FX$, preferably $10^{-5}$—0.3 mol, and more preferably $10^{-4}$—0.2 mol. The preferred metal oxide are $SiO_2$ and $Al_2O_3$.

The divalent europium activated barium fluorohalide phosphor of the present invention having the above-mentioned formula (I) can be prepared, for instance, by a process described below.

As the starting materials, the following materials (1) to (6) can be employed:

(1) barium fluoride;

(2) barium halide (except barium fluoride);

(3) calcium halide;

(4) strontium halide;

(5) sodium halide (except sodium fluoride); and

(6) at least one compound selected from the group consisting of europium compound such as europium halide, europium oxide, europium nitrate and europium sulfate. Further, ammonium halide may be employed as a flux.

In the first place, the above-described starting materials (1) to (6) are mixed in the stoichiometric ratio corresponding to the formula (II):

$$(Ba_{1-a-b}, Ca_a, Sr_b)FX \cdot cNaX':xEu^{2+} \qquad (II)$$

in which X, X′, *a*, *b*, *c* and *x* have the same meanings as defined above.

The mixing procedure is conducted, for instance, by mixing the starting materials in the form of a suspension. From the suspension of the starting material mixture, the solvent (e.g., water) is removed to obtain a dry mixture in a solid form. The removal of solvent is preferably conducted at room temperature or not so high temperature (for instance, not higher than 200°C) by drying under reduced pressure and/or vacuum. The mixing procedure is by no means restricted to this one.

As a modification, there may be employed a procedure of mixing the starting materials (1), (2) and (6) in the form of a suspension, drying the suspension, and then adding the calcium halide (3), strontium halide (4) and sodium halide (5) to the dry mixture.

In the second place, the obtained dry mixture is finely pulverized, and the pulverized mixture is then placed in a heat-resistant container such as a quartz boat or an alumina crucible and fired in an electric

furnace. The firing procedure is conducted at a temperature of 500—1300°C for 0.5—6 hours under a weak reducing atmosphere such as a nitrogen gas atmosphere containing a small amount of hydrogen gas or a carbon dioxide gas atmosphere containing carbon monoxide gas. When the employed europium compound contains trivalent europium, the trivalent europium is reduced to divalent europium under the weak reducing atmosphere in the firing stage.

After firing the mixture of starting materials for the phosphor as described above, the fired product is taken out of the electric furnace, allowed to stand for cooling and pulverized. The pulverized product may be further fired (second firing). The second firing is conducted at a temperature of 500—800°C for 0.5—12 hours in an inert atmosphere such as a nitrogen gas atmosphere or an argon gas atmosphere, or in the above-mentioned weak reducing atmosphere.

After the firing is complete, a powdery phosphor is obtained. The obtained phosphor may be processed in a conventional manner involving a variety of procedures for the preparation of phosphors such as a washing procedure, a drying procedure and a sieving procedure, if desired.

The above-described process gives the divalent europium activated barium fluorohalide phosphor having the above-mentioned formula (I).

In the case that the phosphor of the present invention contains such additive components as described above, the additive components are incorporated into the suspension in the mixing procedure of the starting materials for the phosphor or into the dry mixture prior to the firing stage.

The radiation image storage panel of the present invention will be described hereinafter.

The radiation image storage panel basically comprises a support and a phosphor layer provided thereon, which comprises a binder and a stimulable phosphor dispersed therein. The phosphor layer can be formed on the support, for instance, by the following procedure.

In the first place, the stimulable phosphor particles prepared as described above and a binder are added to an appropriate solvent, and then they are mixed to prepare a coating dispersion which comprises the phosphor particles homogeneously dispersed in the binder solution.

Examples of the binder to be contained in the phosphor layer include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinylchloride copolymer, polymethyl methacrylate, vinyl chloride-vinyl acetate copolymer, polyurethane, cellulose acetate butyrate, polyvinyl alcohol, and linear polyester. Particularly preferred are nitrocellulose, linear polyester, polyalkyl (meth)acrylate, a mixture of nitrocellulose and linear polyester, and a mixture of nitrocellulose and polyalkyl (meth)acrylate. These binders may be crosslinked with a crosslinking agent.

Examples of the solvent employable in the preparation of the coating dispersion include lower alcohols such as methanol, ethanol, n-propanol, and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The mixing ratio of the binder to the stimulable phosphor in the coating dispersion can be determined according to the characteristics of the aimed radiation image storage panel and the nature of the phosphor employed. Generally, the ratio is within the range of from 1:1 to 1:100 (binder:phosphor, by weight), preferably from 1:8 to 1:40.

The coating dispersion may contain a dispersing agent to improve the dispersibility of the phosphor particles therein, and may contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is applied evenly onto the surface of a support to form a layer of the coating dispersion. The coating procedure can be carried out by a conventional method such as a method using a doctor blade, a roll coater or a knife coater.

After applying the coating dispersion onto the support, the coating dispersion is then heated slowly to dryness so as to complete the formation of the phosphor layer. The thickness of the phosphor layer varies depending upon the characteristics of the aimed radiation image storage panel, the nature of the phosphor, the ratio of the binder to the phosphor, etc. In general, the thickness of the phosphor layer is within a range of from 20 μm to 1 mm, and preferably within a range of from 50 to 500 μm.

The phosphor layer can be provided onto the support by the methods other than that given in the above. For instance, the phosphor layer is initially prepared on a sheet material such as a glass plate, a metal plate or a plastic sheet using the aforementioned coating dispersion and then thus prepared phosphor layer is superposed on the genuine support by pressing or using an adhesive agent.

The phosphor layer may consist of either a single layer or plural (two or more) layers. In the case of two

or more phosphor layers, at least one layer contains the aforementioned divalent europium activated barium fluorohalide phosphor. In any cases of a single and plural layers, a variety of known stimulable phosphors can be employed in combination with the above phosphor.

The support material employed in the present invention can be selected from those employable for the radiographic intensifying screens in the conventional radiography or those employable for the known radiation image storage panel. Examples of the support material include plastic films such as films of cellulose acetate, polyester, polyethylene terephthalate, polyamide, polyimide, triacetate and polycarbonate; metal sheets such as aluminum foil and aluminum alloy foil; ordinary papers; baryta paper; resin-coated papers; pigment papers containing titanium dioxide or the like; and papers sized with polyvinyl alcohol or the like. From the viewpoint of characteristics of a radiation image storage panel as an information recording material, a plastic film is preferably employed as the support material of the invention. The plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitivity type radiation image storage panel.

In the preparation of a conventional radiation image storage panel, one or more additional layers are occasionally provided between the support and the phosphor layer so as to enhance the bonding strength between the support and the phosphor layer, or to improve the sensitivity of the panel or the quality of an image provided thereby sharpness and graininess). For instance, a subbing layer or an adhesive layer may be provided by coating polymer material such as gelatin over the surface of the support on the phosphor layer-side. Otherwise, a light-reflecting layer or a light-absorbing layer may be provided by forming a polymer material layer containing a light-reflecting material such as titanium dioxide or a light-absorbing material such as carbon black. In the present invention, one or more of these additional layers may be provided on the support.

As described in U.S. Patent Application No. 496,278, the phosphor layer-side surface of the support (or the surface of an adhesive layer, light-reflecting layer, or light-absorbing layer in the case where such layers provided on the phosphor layer) may be provided with protruded and depressed portions for the enhancement of the sharpness of resulting image.

The radiation image storage panel generally has a transparent protective film on a free surface of a phosphor layer (not facing a support) to protect the phosphor layer from physical and chemical deterioration. In the radiation image storage panel of the present invention, it is preferable to provide a transparent protective film for the same purpose.

The protective film can be provided onto the phosphor layer by coating the surface of the phosphor layer with a solution of a transparent polymer such as a cellulose derivative (e.g., cellulose acetate or nitrocellulose), or a synthetic polymer (e.g., polymethyl methacrylate, polyvinyl butyral, polyvinyl formal, polycarbonate, polyvinyl acetate, or vinyl chloride-vinyl acetate copolymer), and drying the coated solution. Alternatively, the protective film can be provided onto the phosphor layer by beforehand preparing it from a polymer such as polyethylene terephthalate, polyethylene, polyvinylidene chloride or polyamide, followed by placing and fixing it onto the phosphor layer with an appropriate adhesive agent. The transparent protective film preferably has a thickness within the range of approx. 3 to 20 μm.

For the enhancement of sharpness of the resulting image, at least a portion of the radiation image storage panel may be colored with a colorant, as described in U.S. Patent No. 4,394,581 and U.S. Patent Application No. 326,642. For the same purpose, the phosphor layer of the radiation image storage panel according to the present invention may contain a white powder, as described in U.S. Patent No. 4,350,893.

The present invention will be illustrated by the following examples and comparison examples, but these examples by no means restrict the invention.

Example 1

To 500 cc of distilled water ($H_2O$) were added 175.34 g of barium fluoride ($BaF_2$), 333.18 g of barium bromide ($BaBr_2 \cdot 2H_2O$) and 0.783 g of europium bromide ($EuBr_3$), and they were mixed to give a suspension. The suspension was dried at 60°C under reduced pressure for 3 hours and further dried at 150°C under vacuum for another 3 hours. The dry product was finely pulverized in a mortar. To 100 g of thus pulverized product were then added 0.17 g of calcium fluoride ($CaF_2$), 0.43 g of calcium bromide ($CaBr_2$) and 0.1 g of sodium bromide (NaBr), and they were mixed to prepare a mixture of starting materials for a phosphor.

Then, the mixture of the starting materials was placed in an alumina crucible, which was, in turn, placed in a high-temperature electric furnace for firing. The firing was done at 900°C for 1.5 hours in a carbon dioxide gas atmosphere containing a small amount of carbon monoxide gas. After the firing was complete, the crucible was taken out of the furnace and allowed to stand for cooling. The fired product was pulverized to obtain a powdery divalent europium activated barium fluorobromide phosphor

$$[(Ba_{0.99}, Ca_{0.01})FBr \cdot 0.0023NaBr{:}0.001Eu^{2+}].$$

Further, a variety of divalent europium activated barium fluorobromide phosphors were obtained by

varying the amount of calcium ($a$ value) within the range of $10^{-4}$—$10^{-1}$ gram equivalent per 1 mol of $(Ba_{1-a}, Ca_a)FBr$ in the above-described preparation of the phosphor.

Subsequently, using the obtained phosphors, a variety of radiation image storage panels were prepared in the following manner.

To a mixture of the phosphor particles and a linear polyester resin were successively added methyl ethyl ketone and nitrocellulose (nitrification degree: 11.5%), to prepare a dispersion containing the phosphor particles. Then, tricresyl phosphate, n-butanol and methyl ethyl ketone were added to the dispersion, and the mixture was sufficiently stirred by means of a propeller agitator to obtain a homogeneous coating dispersion containing the binder and the phosphor particles in the ratio of 1:20 (binder:phosphor, by weight) and having a viscosity of 25—35 PS (at 25°C).

Then, the coating dispersion was applied onto a polyethylene terephthalate sheet containing carbon black (support, thickness: 250 μm) placed horizontally on a glass plate. The application of the coating dispersion was carried out using a doctor blade. After the coating was complete, the support having the coated dispersion was placed in an oven and heated at a temperature gradually rising from 25 to 100°C. Thus, a phosphor layer having the thickness of approx. 200 μm was formed on the support.

On the phosphor layer was placed a transparent polyethylene terephthalate film (thickness: 12 μm; provided with a polyester adhesive layer) to combine the film and the phosphor layer with the adhesive layer. Thus, a radiation image storage panel consisting essentially of a support, a phosphor layer and a transparent protective film was prepared.

Comparison Example 1

The procedure of Example 1 was repeated except for not adding calcium fluoride and calcium bromide to obtain a powdery divalent europium activated barium fluorobromide phosphor

$$(BaFBr \cdot 0.0023NaBr{:}0.001Eu^{2+}).$$

Using thus obtained phosphor particles, a radiation image storage panel consisting essentially of a support, a phosphor layer and a transparent protective film was prepared in the same manner as described in Example 1.

The radiation image storage panels prepared in Example 1 and Comparison Example 1 were evaluated on the sensitivity and the afterglow characteristics according to the following tests.

(1) Sensitivity

The radiation image storage panel was excited with a He-Ne laser beam (wavelength: 632.8 nm) after exposure to a radiation at 80 KVp to measure the sensitivity thereof.

(2) Afterglow characteristics

The radiation image storage panel was cut to give a test strip having a width of 7 cm. The test strip was exposed to X-rays at 80 KVp and subsequently once scanned with a He-Ne laser beam (wavelength: 632.8 nm) in the direction of its width for $5 \times 10^{-3}$ sec to measure the decay of afterglow of the stimulated emission.

The results of the evaluation on the sensitivity and afterglow characteristics are graphically illustrated in Figs. 1 and 2.

Fig. 1 illustrates graphs (decay curves of afterflow) in which the time is plotted as the abscissa and [amount of afterglow/amount of stimulated emission] as the ordinate.

Dotted curve: the radiation image storage panel containing

$$(Ba_{0.99}, Ca_{0.01})FBr \cdot 0.0023NaBr{:}0.001Eu^{2+}$$

phosphor, and

Solid curve: the radiation image storage panel containing

$$BaFBr \cdot 0.0023NaBr{:}0.001Eu^{2+}$$

phosphor.

Fig. 2 illustrates graphs on

$$(Ba_{1-a}, Ca_a)FBr \cdot 0.0023NaBr{:}0.001Eu^{2+}$$

phosphor, in which

Solid curve indicates a relationship between the amount of calcium ($a$ value) and the logarithmic value of [amount of afterglow/amount of stimulated emission], and

Dotted curve indicates a relationship between the amount of calcium ($a$ value) and the relative sensitivity.

In Fig. 2, the amount of afterglow is a value measured at $2 \times 10^{-3}$ sec after exposure to a He-Ne laser beam.

Example 2

The procedure of Example 1 was repeated except for adding 0.15 g of silicon dioxide ($SiO_2$) in addition

to calcium fluoride, calcium bromide and sodium bromide to 100 g of the pulverized product, to obtain a powdery divalent europium activated barium fluorobromide phosphor

$$[(Ba_{0.99}, Ca_{0.01})FBr \cdot 0.0023NaBr \cdot 0.006SiO_2:0.001Eu^{2+}].$$

Using thus obtained phosphor particles, a radiation image storage panel consisting essentially of a support, a phosphor layer and a transparent protective film was prepared in the same manner as described in Example 1.

The radiation image storage panel prepared in Example 2 was evaluated on the sensitivity and the afterglow characteristics by the above-described tests.

As a result, the relative sensitivity and the logarithmic value of [amount of afterglow/amount of stimulated emission] were respectively 1.1 and −3.5 for the radiation image storage panel containing

$$(Ba_{0.99}, Ca_{0.01})FBr \cdot 0.0023NaBr \cdot 0.006SiO_2:0.001Eu^{2+}$$

phosphor, though those were 0.9 and −2.6 for the radiation image storage panel of Comparison Example 1 containing

$$BaFBr \cdot 0.0023NaBr:0.001Eu^{2+}$$

phosphor (see Fig. 2).

Example 3

To 500 cc of distilled water ($H_2O$) were added 175.34 g of barium fluoride ($BaF_2$), 333.18 g of barium bromide ($BaBr_2 \cdot 2H_2O$) and 0.783 g of europium bromide ($EuBr_3$), and they were mixed to give a suspension. The suspension was dried at 60°C under reduced pressure for 3 hours and further dried at 150°C under vacuum for another 3 hours. The dry product was finely pulverized in a mortar. To 100 g of thus pulverized product were then added 0.27 g of strontium fluoride ($SrF_2$), 0.76 g of strontium bromide ($SrBr_2 \cdot 6H_2O$) and 0.1 g of sodium bromide (NaBr), and they were mixed to prepare a mixture of starting materials for a phosphor.

Then, the mixture of the starting materials was placed in an alumina crucible, which was, in turn, placed in a high-temperature electric furnace for firing. The firing was done at 900°C for 1.5 hours in a carbon dioxide gas atmosphere containing a small amount of carbon monoxide gas. After the firing was complete, the crucible was taken out of the furnace and allowed to stand for cooling. The fired product was pulverized to obtain a powdery divalent europium activated barium fluorobromide phosphor

$$[(Ba_{0.99}, Sr_{0.01})FBr \cdot 0.0023NaBr:0.001Eu^{2+}].$$

Further, a variety of divalent europium activated barium fluorobromide phosphors were obtained by varying the amount of strontium (*b* value) within the range of $10^{-4}$—$10^{-1}$ gram equivalent per 1 mol of $(Ba_{1-b}, Sr_b)FBr$ in the preparation of the phosphor.

Using the obtained phosphors, a variety of radiation image storage panels consisting essentially of a support, a phosphor layer and a transparent protective film were prepared in the same manner as described in Example 1.

Comparison Example 2

The procedure of Example 3 was repeated except for not adding strontium fluoride and strontium bromide to obtain a powdery divalent europium activated barium fluorobromide phosphor

$$(BaFBr \cdot 0.0023NaBr:0.001Eu^{2+}).$$

Using thus obtained phosphor particles, a radiation image storage panel consisting essentially of a support, a phosphor layer and a transparent protective film was prepared in the same manner as described in Example 1.

The radiation image storage panels prepared in Example 3 and Comparison Example 2 were evaluated on the sensitivity and the afterglow characteristics by the above-described tests.

The results are graphically illustrated in Figs. 3 and 4.

Fig. 3 illustrates graphs (decay curves of afterglow) in which the time is plotted as the abscissa and [amount of afterglow/amount of stimulated emission] as the ordinate.

Dotted curve: the radiation image storage panel containing

$$(Ba_{0.99}, Sr_{0.01})FBr \cdot 0.0023NaBr:0.001Eu^{2+}$$

phosphor, and

Solid curve: the radiation image storage panel containing

$$BaFBr \cdot 0.0023NaBr:0.001Eu^{2+}$$

phosphor.

Fig. 4 illustrates graphs on

$$(Ba_{1-b}, Sr_b)FBr \cdot 0.0023NaBr:0.001Eu^{2+}$$

phosphor, in which

Solid curve indicates a relationship between the amount of strontium (*b* value) and the logarithmic value of [amount of afterglow/amount of stimulated emission], and

Dotted curve indicates a relationship between the amount of strontium (*b* value) and the relative sensitivity.

In Fig. 4, the amount of afterglow is a value measured at $2\times10^{-3}$ sec after exposure to a He-Ne laser beam.

Example 4

The procedure of Example 3 was repeated except for adding 0.15 g of silicon dioxide in addition to strontium fluoride, strontium bromide and sodium bromide to 100 g of the pulverized product, to obtain a powdery divalent europium activated barium fluorobromide phosphor

$$[(Ba_{0.99}, Sr_{0.01})FBr \cdot 0.0023NaBr \cdot 0.006SiO_2:0.001Eu^{2+}].$$

Using thus obtained phosphor particles, a radiation image storage panel consisting essentially of a support, a phosphor layer and a transparent protective film was prepared in the same manner as described in Example 1.

The radiation image storage panel prepared in Example 4 was evaluated on the sensitivity and the afterglow characteristics by the above-described tests.

As a result, the relative sensitivity and the logarithmic value of [amount of afterglow/amount of stimulated emission] were respectively 1.1 and −3.2 for the radiation image storage panel containing

$$(Ba_{0.99}, Sr_{0.01})FBr \cdot 0.0023NaBr \cdot 0.006SiO_2:0.001Eu^{2+}$$

phosphor, though those were 0.5 and −2.6 for the radiation image storage panel of Comparison Example 2 containing

$$BaFBr \cdot 0.0023NaBr:0.001Eu^{2+}$$

phosphor (see Fig. 4).

Example 5

The procedure of Example 3 was repeated except for adding 0.43 g of calcium bromide instead of strontium bromide to 100 g of the pulverized product, to obtain a powdery divalent europium activated barium fluorobromide phosphor

$$[(Ba_{0.99}, Ca_{0.005}, Sr_{0.005})FBr \cdot 0.0023NaBr:0.001Eu^{2+}].$$

Further, a variety of divalent europium activated barium fluorobromide phosphors were obtained by varying the total amount of calcium and strontium ([$a+b$] value) within the range of $10^{-4}$—$10^{-1}$ gram equivalent per 1 mol of $(Ba_{1-a-b}, Ca_a, Sr_b)FBr$ on the condition that the molar amount of calcium bromide is the same as that of strontium fluoride in the preparation of the phosphor.

Using the obtained phosphors, a variety of radiation image storage panels consisting essentially of a support, a phosphor layer and a transparent protective film were prepared in the same manner as described in Example 1.

The radiation image storage panels prepared in Example 5 were evaluated on the sensitivity and the afterglow characteristics by the above-described tests.

The results of the evaluation on the sensitivity and afterglow characteristics are graphically illustrated in Figs. 5 and 6. The results of the evaluation on the radiation image storage panel of Comparison Example 2 are also illustrated in Figs. 5 and 6.

Fig. 5 illustrates graphs (decay curves of afterglow) in which the time is plotted as the abscissa and [amount of afterglow/amount of stimulated emission] as the ordinate.

Dotted curve: the radiation image storage panel containing

$$(Ba_{0.99}, Ca_{0.005}, Sr_{0.005})FBr \cdot 0.0023NaBr:0.001Eu^{2+}$$

phosphor, and

Solid curve: the radiation image storage panel containing

$$BaFBr \cdot 0.0023NaBr:0.001Eu^{2+}$$

phosphor.

Fig. 6 illustrates graphs on

$$(Ba_{1-a-b}, Ca_a, Sr_b)FBr \cdot 0.0023NaBr:0.001Eu^{2+}$$

phosphor, in which

Solid curve indicates a relationship between the total amount of calcium and strontium ([*a*+*b*] value) and the logarithmic value of [amount of afterglow/amount of stimulated emission], and

Dotted curve indicates a relationship between the total amount of calcium strontium ([*a*+*b*] value) and the relative sensitivity.

In Fig. 6, the amount of afterglow is a value measured at $2\times10^{-3}$ sec after exposure to a He-Ne laser beam.

Example 6

The procedure of Example 5 was repeated except for adding 0.15 g of silicon dioxide in addition to calcium bromide, strontium fluoride and sodium bromide to 100 g of the pulverized product, to obtain a powdery divalent europium activated barium fluorobromide phosphor

$$[(Ba_{0.99}, Ca_{0.005}, Sr_{0.005})FBr \cdot 0.0023NaBr \cdot 0.006SiO_2{:}0.001Eu^{2+}].$$

Using thus obtained phosphor particles, a radiation image storage panel consisting essentially of a support, a phosphor layer and a transparent protective film was prepared in the same manner as described in Example 1.

The radiation image storage panel prepared in Example 6 was evaluated on the sensitivity and the afterglow characteristics by the above-described tests.

As a result, the relative sensitivity and the logarithmic value of [amount of afterglow/amount of stimulated emission] were respectively 1.1 and −3.4 for the radiation image storage panel containing

$$(Ba_{0.99}, Ca_{0.005}, Sr_{0.005})FBr \cdot 0.0023NaBr \cdot 0.006SiO_2{:}0.001Eu^{2+}$$

phosphor, though those were 0.5 and −2.6 for the radiation image storage panel of Comparison Example 2 containing

$$BaFBr \cdot 0.0023NaBr{:}0.001Eu^{2+}$$

phosphor (see Fig. 6).

**Claims**

1. A divalent europium activated barium fluorohalide phosphor having the formula (I):

$$(Ba_{1-a-b}, Ca_a, Sr_b)FX \cdot cNaX'{:}xEu^{2+} \qquad (I)$$

in which each of X and X′ is at least one halogen selected from the group consisting of Cl, Br and I; *a* and *b* are numbers satisfying the conditions of $0\leqq a\leqq10^{-1}$ and $0\leqq b\leqq10^{-1}$ and $a+b\neq0$, provided that a+b is not higher than $5\times10^{-2}$ in the case of $ab\neq0$; and *c* and *x* are numbers satisfying the conditions of $0<c\leqq2.0$ and $0<x\leqq0.2$, respectively.

2. The phosphor as claimed in claim 1, in which *a* and *b* in the formula (I) are numbers satisfying the conditions of $0<a\leqq10^{-1}$ and $b=0$, respectively.

3. The phosphor as claimed in claim 2, in which *a* in the formula (I) is a number satisfying the condition of $10^{-3}\leqq a\leqq5\times10^{-2}$.

4. The phosphor as claimed in claim 1, in which *a* and *b* in the formula (I) are numbers satisfying the conditions of $a=0$ and $0<b\leqq10^{-1}$, respectively.

5. The phosphor as claimed in claim 4, in which *b* in the formula (I) is a number satisfying the condition of $5\times10^{-4}\leqq b\leqq5\times10^{-2}$.

6. The phosphor as claimed in claim 1, in which *a* and *b* in the formula (I) are numbers satisfying the conditions of $0<a+b\leqq5\times10^{-2}$ and $ab\neq0$.

7. The phosphor as claimed in claim 6, in which *a* and *b* in the formula (I) are numbers satisfying the condition of $5\times10^{-4}\leqq a+b\leqq2\times10^{-2}$.

8. The phosphor as claimed in claim 1, in which *c* in the formula (I) is a number satisfying the condition of $10^{-5}\leqq c\leqq5\times10^{-1}$.

9. The phosphor as claimed in claim 8, in which *c* in the formula (I) is a number satisfying the condition of $5\times10^{-4}\leqq c\leqq10^{-2}$.

10. The phosphor as claimed in claim 1, in which X in the formula (I) is at least one halogen selected from the group consisting of Br and I.

11. The phosphor as claimed in claim 1, in which X′ in the formula (I) is Br.

12. A radiation image storage panel comprising a support and a stimulable phosphor layer provided thereon, characterized in that said stimulable phosphor layer contains a divalent europium activated barium fluorohalide phosphor having the formula (I):

$$(Ba_{1-a-b}, Ca_a, Sr_b)FX \cdot cNaX'{:}xEu^{2+} \qquad (I)$$

in which each of X and X' is at least one halogen selected from the group consisting of Cl, Br and I; *a* and *b* are numbers satisfying the conditions of $0 \leqq a \leqq 10^{-1}$ and $0 \leqq b \leqq 10^{-1}$ and $a+b \neq 0$, provided that a+b is not higher than $5 \times 10^{-2}$ in the case of $ab \neq 0$; and *c* and *x* are numbers satisfying the conditions of $0 < c \leqq 2.0$ and $0 < x \leqq 0.2$, respectively.

13. The radiation image storage panel as claimed in claim 12, in which *a* and *b* in the formula (I) are numbers satisfying the conditions of $0 < a \leqq 10^{-1}$ and $b = 0$, respectively.

14. The radiation image storage panel as claimed in claim 13, in which *a* in the formula (I) is a number satisfying the condition of $10^{-3} \leqq a \leqq 5 \times 10^{-2}$.

15. The radiation image storage panel as claimed in claim 12, in which *a* and *b* in the formula (I) are numbers satisfying the conditions of $a = 0$ and $0 < b \leqq 10^{-1}$, respectively.

16. The radiation image storage panel as claimed in claim 15, in which *b* in the formula (I) is a number satisfying the condition of $5 \times 10^{-4} \leqq b \leqq 5 \times 10^{-2}$.

17. The radiation image storage panel as claimed in claim 12, in which *a* and *b* in the formula (I) are numbers satisfying the conditions of $0 < a+b \leqq 5 \times 10^{-2}$ and $ab \neq 0$.

18. The radiation image storage panel as claimed in claim 17, in which *a* and *b* in the formula (I) are numbers satisfying the condition of $5 \times 10^{-4} \leqq a+b \leqq 2 \times 10^{-2}$.

19. The radiation image storage panel as claimed in claim 12, in which *c* in the formula (I) is a number satisfying the condition of $10^{-5} \leqq c \leqq 5 \times 10^{-1}$.

20. The radiation image storage panel as claimed in claim 19, in which *c* in the formula (I) is a number satisfying the condition of $5 \times 10^{-4} \leqq c \leqq 10^{-2}$.

21. The radiation image storage panel as claimed in claim 12, in which X in the formula (I) is at least one halogen selected from the group consisting of Br and I.

22. The radiation image storage panel as claimed in claim 12, in which X' in the formula (I) is Br.

**Patentansprüche**

1. Mit zweiwertigem Europium aktivierter Bariumfluorhalogenid-Leuchtstoff der Formle (I):

$$(Ba_{1-a-b}, Ca_a, Sr_b)FX \cdot cNaX':xEu^{2+} \qquad (I)$$

worin bedeuten:

X und X' mindestens ein Halogen, gewählt aus der Gruppe Cl, Br und J;

a und b Zahlen, die den Bedingungen $0 \leqq a \leqq 10^{-1}$ und $0 \leqq b \leqq 10^{-1}$ und $a+b \neq 0$, genügen, vorausgesetzt, daß a+b nicht mehr als $5 \times 10^{-2}$ ist, im Falle von $ab \neq 0$; und

c und x Zahlen, die den Bedingungen $0 < c \leqq 2{,}0$ und $0 < x \leqq 0{,}2$ genügen.

2. Leuchtstoff nach Anspruch 1, wobei a und b in der Formel (I) Zahlen sind, die den Bedingungen $0 < a \leqq 10^{-1}$ und $b = 0$ genügen.

3. Leuchtstoff nach Anspruch 2, wobei a in der Formel (I) eine Zahl ist, die der Bedingung $10^{-3} \leqq a \leqq 5 \times 10^{-2}$ genügt.

4. Leuchtstoff nach Anspruch 1, wobei a und b in der Formel (I) Zahlen sind, die den Bedingungen $a = 0$ und $0 < b \leqq 10^{-1}$ genügen.

5. Leuchtstoff nach Anspruch 4, wobei b in der Formel (i) eine Zahl ist, die der Bedingung $5 \times 10^{-4} \leqq b \leqq 5 \times 10^{-2}$ genügt.

6. Leuchtstoff nach Anspruch 1, wobei a und b in der Formel (I) Zahlen sind, die den Bedingungen $0 < a+b \leqq 5 \times 10^{-2}$ und $ab \neq 0$ genügen.

7. Leuchtstoff nach Anspruch 6, wobei a und b in der Formel (I) Zahlen sind, die der Bedingung $5 \times 10^{-4} \leqq a+b \leqq 2 \times 10^{-2}$ genügen.

8. Leuchtstoff nach Anspruch 1, wobei c in der Formel (I) eine Zahl ist, die der Bedingung $10^{-5} \leqq c \leqq 5 \times 10^{-1}$ genügt.

9. Leuchtstoff nach Anspruch 8, wobei c in der Formel (I) eine Zahl ist, die der Bedingung $5 \times 10^{-4} \leqq c \leqq 10^{-2}$ genügt.

10. Leuchtstoff nach Anspruch 1, wobei X in der Formel (I) mindestens ein Halogen, ausgewählt aus der Gruppe Br und J ist.

11. Leuchtstoff nach Anspruch 1, wobei X' in der Formel (I) Br ist.

12. Strahlungsbild-Speicherplatte, umfassend einen Träger und eine darauf vorgesehene Schicht mit einem stimulierbaren Leuchtstoff, dadurch gekennzeichnet, daß die Schicht mit dem stimulierbaren Leuchtstoff, dadurch gekennzeichnet, daß die Schicht mit dem stimulierbaren Leuchtstoff einen mit zweiwertigem Europium aktivierten Bariumfluorhalogenid-Leuchtstoff der Formel (I) enthält:

$$(Ba_{1-a-b}, Ca_a, Sr_b)FX \cdot cNaX':xEu^{2+} \qquad (I)$$

worin bedeuten:

X und X' mindestens ein Halogen, ausgewählt aus der Gruppe Cl, Br und J;

a und b Zahlen, die den Bedingungen $0 \leqq a \leqq 10^{-1}$ und $0 \leqq b \leqq 10^{-1}$ und $a+b \neq 0$, genügen, vorausgesetzt, daß a+b nicht mehr als $5 \times 10^{-2}$ ist, im Falle von $ab \neq 0$; und

c und x Zahlen, die den Bedingungen $0 < c \leqq 2{,}0$ und $0 < x \leqq 0{,}2$ genügen.

13. Strahlungsbild-Speicherplatte nach Anspruch 12, wobei a und b in der Formel (I) Zahlen sind, die den Bedingungen $0<a\leqq10^{-1}$ und $b=0$ genügen.

14. Strahlungsbild-Speicherplatte nach Anspruch 13, wobei a in der Formel (I) eine Zahl ist, die der Bedingung $10^{-3}\leqq a\leqq5\times10^{-2}$ genügt.

15. Strahlungsbild-Speicherplatte nach Anspruch 12, wobei a und b in der Formel (I) Zahlen sind, die den Bedingungen $a=0$ und $0<b\leqq10^{-1}$ genügen.

16. Strahlungsbild-Speicherplatte nach Anspruch 15, wobei b in der Formel (I) eine Zahl ist, die der Bedingung $5\times10^{4}\leqq b\leqq5\times10^{-2}$ genügt.

17. Strahlungsbild-Speicherplatte nach Anspruch 12, wobei a und b in der Formel (I) Zahlen sind, die den Bedingungen $0<a+b\leqq5\times10^{-2}$ und $ab\neq0$ genügen.

18. Strahlungsbild-Speicherplatte nach Anspruch 17, wobei a und b in der Formel (I) Zahlen sind, die der Bedingung $5\times10^{-4}\leqq a+b\leqq2\times10^{-2}$ genügen.

19. Strahlungsbild-Speicherplatte nach Anspruch 12, wobei c in der Formel (I) eine Zahl ist, die der Bedingung $10^{-5}\leqq c\leqq5\times10^{-1}$ genügt.

20. Strahlungsbild-Speicherplatte nach Anspruch 19, wobei c in der Formel (I) eine Zahl ist, die der Bedingung $5\times10^{-4}\leqq c\leqq10^{-2}$ genügt.

21. Strahlungsbild-Speicherplatte nach Anspruch 12, wobei X in der Formel (I) mindestens ein Halogen, gewählt aus der Gruppe Br und J, ist.

22. Strahlungsbild-Speicherplatte nach Anspruch 12, wobei X' in der Formel (I) Br ist.

**Revendications**

1. Un produit luminescent en fluorohalogénure de baryum activé par de l'europium divalent de formule (I):

$$(Ba_{1-a-b}, Ca_a, Sr_b)FX\cdot cNaX':xEu^{2+} \qquad (I)$$

où chacun de X et X' est au moins un halogène choisi dans le groupe constitué par Cl, Br et I; et *a* et *b* sont des nombres satisfaisant aux conditions $0\leqq a\leqq10^{-1}$ et $0\leqq b\leqq10^{-1}$ et $a+b\neq0$, étant entendu que a+b n'est pas supérieur à $5\times10^{-2}$ dans le cas où $ab\neq0$; et *c* et *x* sont des nombres satisfaisant respectivement aux conditions $0<c\leqq2{,}0$ et $0<x\leqq0{,}2$.

2. Le produit luminescent tel que revendiqué à la revendication 1, dans lequel *a* et *b* dans la formule (I) sont des nombres saitsfaisant respectivement aux conditions $0<a\leqq10^{-1}$ et $b=0$.

3. Le produit luminescent tel que revendiqué à la revendication 2, dans lequel *a* dans la formule (I) est un nombre satisfaisant à la condition $10^{-3}\leqq a\leqq5\times10^{-2}$.

4. Le produit luminescent tel que revendiqué à la revendication 1, dans lequel *a* et *b* dans la formule (I) sont des nombres satisfaisant respectivement aux conditions $a=0$ et $0<b\leqq10^{-1}$.

5. Le produit luminescent tel que revendiqué à la revendication 4, dans lequel *b* dans la formule (I) est un nombre satisfaisant à la condition $5\times10^{-4}\leqq b\leqq5\times10^{-2}$.

6. Le produit luminescent tel que revendiqué à la revendication 1, dans lequel *a* et *b* dans la formule (I) sont des nombres satisfaisant aux conditions $0<a+b\leqq5\times10^{-2}$ et $ab\neq0$.

7. Le produit luminescent tel que revendiqué à la revendication 6, dans lequel *a* et *b* dans la formule (I) sont des nombres satisfaisant à la condition $5\times10^{-4}\leqq a+b\leqq2\times10^{-2}$.

8. Le produit luminescent tel que revendiqué à la revendication 1, dans lequel *c* dans la formule (I) est un nombre satisfaisant à la condition $10^{-5}\leqq c\leqq5\times10^{-1}$.

9. Le produit luminescent tel que revendiqué à la revendication 8, dans lequel *c* dans la formule (I) est un nombre satisfaisant à la condition $5\times10^{-4}\leqq c\leqq10^{-2}$.

10. Le produit luminescent tel que revendiqué à la revendication 1, dans lequel X dans la formule (I) est au moins un halogéne choisi dans le groupe constitué de Br et de I.

11. Le produit luminescent tel que revendiqué à la revendication 1, dans lequel X' dans la formule (I) est du Br.

12. Un panneau de stockage d'une image obtenue par un rayonnement comprenant un support et une couche de produit luminescent stimulable au dessus, caractérisé en ce que ladite couche de produit luminescent stimulable contient un produit luminescent en fluorohalogénure de baryum activé par de l'europium divalent ayant pour formule, la formula (I):

$$(Ba_{1-a-b}, Ca_a, Sr_b)FX\cdot cNaX':xEu^{2+} \qquad (I)$$

où chacun de X et X' est au moins un halogène choisi dans le groupe constitué par Cl, Br et I; et *a* et *b* sont des nombres satisfaisant aux conditions $0\leqq a\leqq10^{-1}$ et $0\leqq b\leqq10^{-1}$ et $a+b\neq0$, étant entendu que a+b n'est pas supérieur à $5\times10^{-2}$ dans le cas où $ab\neq0$; et *c* et *x* sont des nombres satisfaisant respectivement aux conditions $0<c\leqq2{,}0$ et $0<x\leqq0{,}2$.

13. Le panneau de stockage d'une image obtenue par un rayonnement tel que revendique à la revendication 12, dans lequel *a* et *b* dans la formule (I) sont des nombres satisfaisant respectivement aux conditions $0<a\leqq10^{-1}$, et $b=0$.

14. Le panneau de stockage d'une image obtenue par un rayonnement tel que revendiqué à la revendication 13, dans lequel *a* dans la formule (I) est un nombre satisfaisant à la condition $10^{-3} \leqq a \leqq 5 \times 10^{-2}$.

15. Le panneau de stockage d'une image obtenue par un rayonnement tel que revendiqué à la revendication 12, dans lequel *a* et *b* dans la formule (I) sont des nombres satisfaisant respectivement aux conditions $a=0$ et $0<b \leqq 10^{-1}$.

16. Le panneau de stockage d'une image obtenue par un rayonnement tel que revendiqué à la revendication 15, dans lequel *b* dans la formule (I) est un nombre satisfaisant à la condition $5 \times 10^{-4} \leqq b \leqq 5 \times 10^{-2}$.

17. Le panneau de stockage d'une image obtenue par un rayonnement tel que revendiqué à la revendication 12, dans lequel *a* et *b* dans la formule (I) sont des nombres satisfaisant aux conditions $0<a+b \leqq 5 \times 10^{-2}$ et $ab \neq 0$.

18. Le panneau de stockage d'une image obtenue par un rayonnement tel que revendiqué à la revendication 17, dans lequel *a* et *b* dans la formule (I) sont des nombres satisfaisant à la condition $5 \times 10^{-4} \leqq a+b \leqq 2 \times 10^{-2}$.

19. Le panneau de stockage d'une iamge obtenue par un rayonnement tel que revendiqué à la revendication 12, dans lequel *c* dans la formule (I) est un nombre satisfaisant à la condition $10^{-5} \leqq c \leqq 5 \times 10^{-1}$.

20. Le panneau de stockage d'une image obtenue par un rayonnement tel que revendiqué à la revendication 19, dans lequel *c* dans la formule (I) est un nombre satisfaisant à la condition $5 \times 10^{-4} \leqq c \leqq 10^{-2}$.

21. Le panneau de stockage d'une image obtenue par un rayonnement tel que revendiqué à la revendication 12, dans lequel X dans la formule (I) est au moins un halogène choisi dans le groupe constitué de Br et de I.

22. Le panneau de stockage d'une image obtenue par un rayonnement tel que revendiqué à la revendication 12, dans lequel X' dans la formule (I) est du Br.

FIG. 1

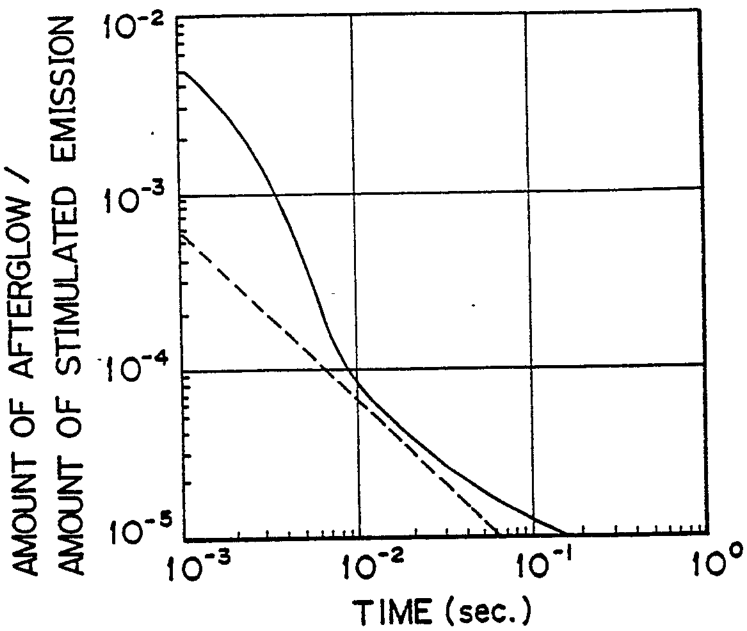
AMOUNT OF AFTERGLOW / AMOUNT OF STIMULATED EMISSION
$10^{-2}$
$10^{-3}$
$10^{-4}$
$10^{-5}$
$10^{-3}$
$10^{-2}$
$10^{-1}$
$10^{0}$
TIME (sec.)

FIG. 2

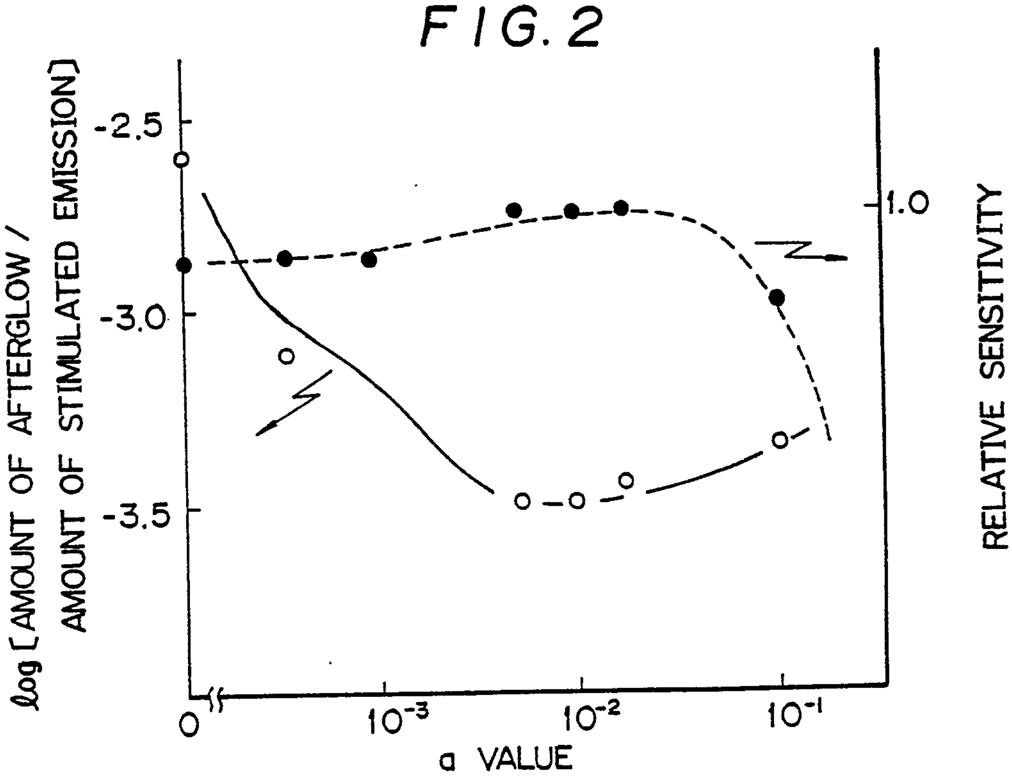
log [AMOUNT OF AFTERGLOW / AMOUNT OF STIMULATED EMISSION]
-2.5
-3.0
-3.5
RELATIVE SENSITIVITY
1.0
0
$10^{-3}$
$10^{-2}$
$10^{-1}$
a VALUE

FIG. 3

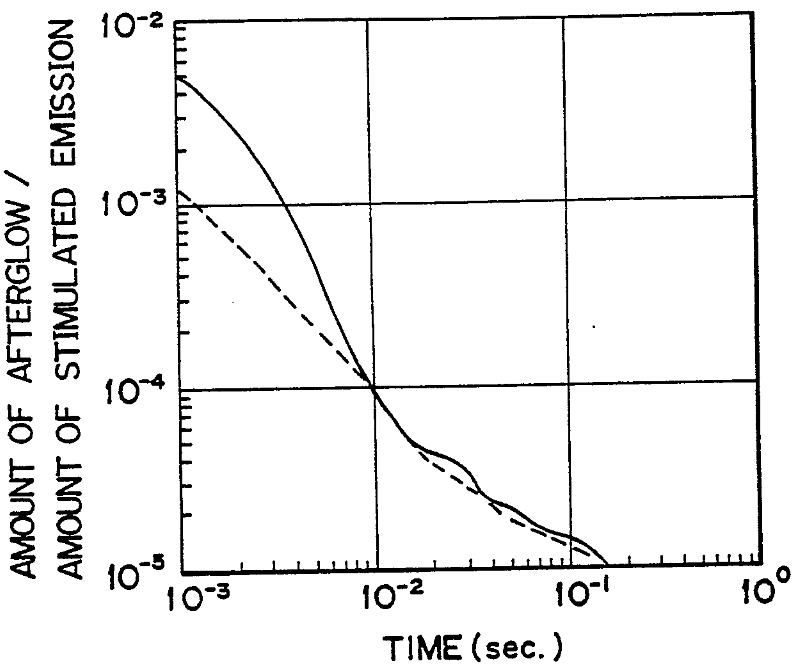
AMOUNT OF AFTERGLOW / AMOUNT OF STIMULATED EMISSION
$10^{-2}$
$10^{-3}$
$10^{-4}$
$10^{-5}$
$10^{-3}$
$10^{-2}$
$10^{-1}$
$10^{0}$
TIME (sec.)

FIG. 4

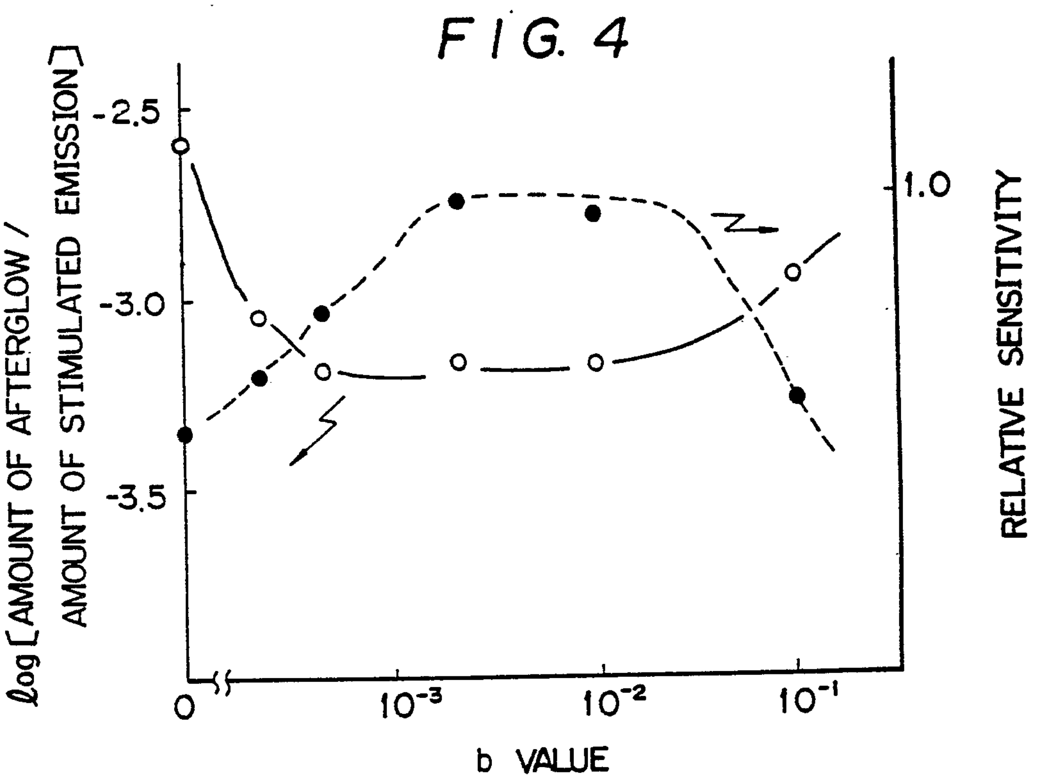
log [AMOUNT OF AFTERGLOW / AMOUNT OF STIMULATED EMISSION]
-2.5
-3.0
-3.5
RELATIVE SENSITIVITY
1.0
0
$10^{-3}$
$10^{-2}$
$10^{-1}$
b VALUE

FIG. 5

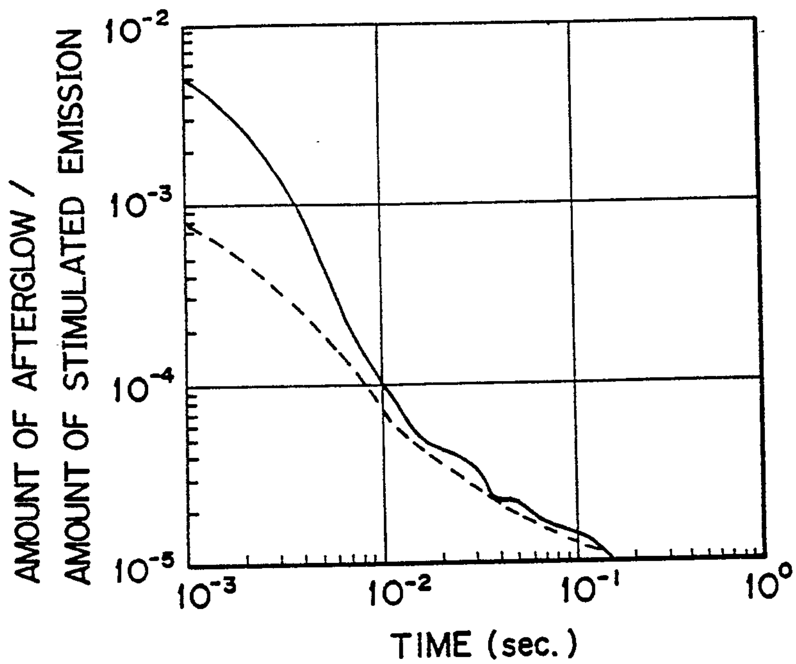
AMOUNT OF AFTERGLOW /
AMOUNT OF STIMULATED EMISSION
$10^{-2}$
$10^{-3}$
$10^{-4}$
$10^{-5}$
$10^{-3}$
$10^{-2}$
$10^{-1}$
$10^{0}$
TIME (sec.)

FIG. 6

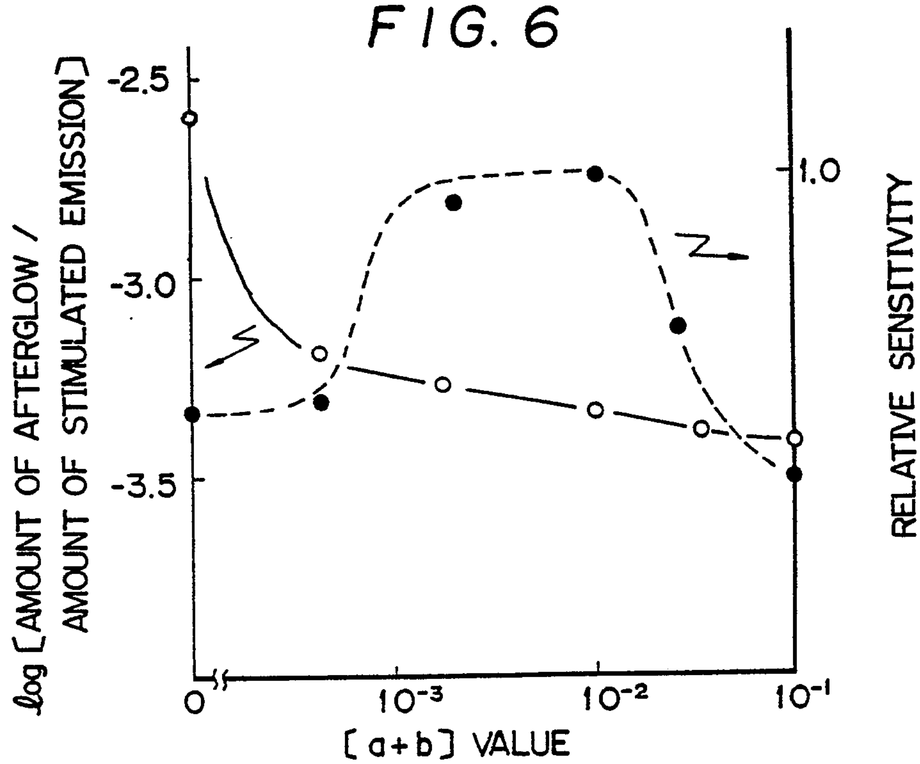
log [AMOUNT OF AFTERGLOW /
AMOUNT OF STIMULATED EMISSION]
-2.5
-3.0
-3.5
1.0
RELATIVE SENSITIVITY
0
$10^{-3}$
$10^{-2}$
$10^{-1}$
[a+b] VALUE